Europäisches Patentamt

European Patent Office

Office européen des brevets

(11) Veröffentlichungsnummer: **0 049 218**
**B1**

(12) **EUROPÄISCHE PATENTSCHRIFT**

(45) Veröffentlichungstag der Patentschrift:
19.03.86

(21) Anmeldenummer: 81810355.8

(22) Anmeldetag: 28.08.81

(51) Int. Cl.⁴: **F 16 B 25/00**

(54) Selbstbohrende Schraube.

(30) Priorität: 30.09.80 AT 4887/80

(43) Veröffentlichungstag der Anmeldung:
07.04.82 Patentblatt 82/14

(45) Bekanntmachung des Hinweises auf die Patenterteilung:
19.03.86 Patentblatt 86/12

(84) Benannte Vertragsstaaten:
BE DE FR GB IT LU NL SE

(56) Entgegenhaltungen:
DE - A - 2 126 914
DE - A - 2 215 359
DE - A - 2 353 375
DE - A - 2 613 720
DE - A - 2 636 494
DE - A - 2 801 962
DE - B - 1 500 798
GB - A - 1 277 044
US - A - 3 712 753
US - A - 3 916 757
US - A - 4 028 987

(73) Patentinhaber: SFS Stadler AG., Nefenstrasse 30,
CH-9435 Heerbrugg (CH)

(72) Erfinder: Regensburger, Werner, Gässelistrasse 5,
CH-9443 Widnau (CH)

(74) Vertreter: Werffeli, Heinz R., Dipl.-Ing.,
Postfach 275 Waldgartenstrasse 12,
CH-8125 Zürich-Zollikerberg (CH)

LIBER, STOCKHOLM 1986

**Beschreibung**

Die Erfindung betrifft eine selbstbohrende Schraube mit einem am freien Ende des Schraubenschaftes in eine Öffnung, einen Schlitz od. dgl. eingreifend oder stumpf anstoßend befestigten, aus einem Rohrstahl oder einem Hartmetall gefertigten Bohrteil.

Solche selbstohrende Schrauben sind bekannt (DE-A -2801 962). Es besteht dadurch die Möglichkeit, daß die Schraube, also der Schraubenkopf und der Schraubenschaft und somit auch des Gewinde aus einem rostfreien Material hergestellt werden können. Der Bohrteil hingegen, welcher die Bohruag zur Aufnahme der Schraube herstellt, kann aus einem entsprechend harten Bohrstahl bzw. einem Hartmetall gefertigt werden, wobei dann dieser Teil nicht in rostfreier Ausführung gehalten werden muß.

Ferner sind selbstbohrende Schrauben bekannt, die einstückig durchgehend aus gleichem Material gefertigt sind (US-A - 4028987), bei denen neben einer Bohrspitze mit Abstand von dieser zusätzlich auskragende Flügel bzw. Laschen vorgesehen sind, mit denen die von der Bohrspitze hergestellte bohrung vergrößert werden kann. Es kann also stufenweise eine entsprechend große Bohrung hergestellt werden. Bei solchen selbstbohrenden Schrauben ist die Bohrspitze selbst nur aus einem Einsatzstahl gefertigt, wobei zusätzlich noch Fräsarbeiten zur Herstellung der Bohrspitze durchgeführt werden müssen. Au-ßerdem sind sn der Schraube verschiedene Arbeitsgänge erforderlich, um die zusätzlichen Laschen bzw. Flügel herzustellen. Eine solche Schraube ist nur dann dazu geeignet, eine entsprechend große Bohrung zum nachträglichen Eintritt des Gewindeabschnittes zu schaffen. Für Schneideinsätze zur Herstellung von Bohrungen verschiedenen Durchmesser in zwei mit Abstand voneinander liegenden Teilen sind Schrauben mit solchen zusätzlichen, fest mit dem Schraubenschaft verbundenen Flügeln bzw. Laschen nicht geeignet.

Eine Anpassung an verschiedene Gegebenheiten, also an verschiedene Einsatzmöglichkeiten der Schrauben ist schon deshalb nicht gegeben, weil eine Abhängigkeit von starren Fräsmaschineneinstellungen sowie von verschiedenen Arbeitsschritten zur Herstellung der Laschen bzw. Flügel gegeben ist.

Es sind auch Bohrer bekannt geworden (US-A - 3712753), bei welchen neben einer getrennt einsetzbaren Bohrspitze gegenüber dieser Bohrspitze zurückversetzt frei auskragende Bohrflügel vorgesehen sind. Es ist auch bei einer solchen Ausgestaltung eines Bohrers nur möglich, in aufeinanderfolgenden Stufen eine entsprechend große Bohrung anzufertigen, wobei jedoch keine Möglichkeit geschaffen ist, diese hier vorgesehenen Bohrflügel bzw. Laschen während des Bohrvorganges zu entfernen, um dann nur noch eine Bohrung mit geringerem Durchmesser von der Bohrspitze selbst weiterzuführen. Es kann also nicht nur diese Konstruktion bei einem bohrer auf eine selbstbohrende Schraube oder ein selbstbohrendes anderes Befestigungselement umkonstruiert werden, da noch zusätzliche sehr wesentliche Maßnahmen ergriffen werden müssen.

Es hat sich weiters bei bekannten selbstbohrenden Schrauben mit auskragenden Flügeln oder Lappen herausgestellt, daß aus dem Schaftteil der Schraube angestauchte bzw. ausgeformte Laschen bzw. Flügel neben einer schlechten Schneidengeometrie ein zu kleines Flügeldurchmessermaß für die Erzeugung des Späneabfuhrloches im Weichteil eines Verbindungspaketes aufweisen. Es ist einfach ersichtlich, daß aus dem Schraubenkörper heraus nicht entsprechend große Flügel bzw. Laschen herausgeformt werden können, da ja ansonsten der Querschnitt der Schraube übermäßig geschwächt würde, so daß das übertragbare Drehmoment wesentlich herabgesetzt würde.

Die vorliegende Erfindung hat sich zur Aufgabe gestellt, eine selbstbohrende Schraube zu schaffen, welche auf verschiedene Einsatzmöglichkeiten angepaßt werden kann und bei welcher die zum Nachbohren größerer Löcher vorgesehenen Lappen bzw. Flügel ohne eine Querschnittsschwächung des Schraubenkörpers vorgesehen werden können.

Erfindungsgemäß gelingt dies dadurch, daß am Bohrteil mit axialem Abstand von der Bohrspitze ein oder mehrere quer zur Schraubenachse frei auskragende(r) Flügel oder Lappen anschließt bzw. anschließen, dessen bzw. deren der Bohrspitze zugewandte Begrenzung als Bohrschneide ausgebildet ist, und daß an der Anschlußstelle der Flügel an den Bohrteil eine annähernd parallel zur Schraubenachse verlaufende Sollbruchkerbe vorgesehen ist.

Der Flügel bzw. die Flügel sind durch die erfindungsgemäßen Maßnahmen unabhängig vom Schaft der Schraube angeordnet, so daß sich dadurch keine Querschnittsschwächung im Schraubenschaft ergibt. Die Bohrspitze selbst kann bei einer solchen Schraube aus hochfesten Schnellstählen gefertigt werden, so daß die Schrauben auch dort eingesetzt werden können, wo die zu verbohrenden Stähle vermehrt höchste Festigkeit aufweisen, wobei die üblich bekannten Flügelbohrschrauben aus Einsatzstahl diesen Aufgaben nicht mehr gewachsen sind.

Durch die erfindungsgemäßen Maßnahmen ist es auch möglich, solche Flügel bei Schrauben anzubringen, die aus verschiedenen Schraubenwerkstoffen bestehen. Es können daher auch solche Flügel bei Schrauben aus Aluminium, Buntmetall, Stahl, nichtrostenden Stählen oder Kunststoff eingesetzt werden.

Die Flügel mit den Bohrschneiden können in ihren Schneidwinkeln bzw. in ihrer Schnittgeometrie mit einfachen Mitteln den für den jeweiligen Durchdringungsfall optimalen Wert erhalten, so daß entsprechend dem Einsatz der selbstbohrenden Schraube ein entsprechender Bohrteil eingesetzt werden kann.

Die Länge der frei auskragenden Flügel kann dabei beliebig gewählt werden, da ja dadurch nicht mehr der Querschnitt des Schraubenschaftes geschwächt wird. Es wird dadurch in dem zu durchdringenden Weichteil des Befestigungspaketes, z.B. in Holz, Kunststoff, Alu usw., eine optimale Bohröffnung für die Späneabfuhr geschaffen.

Weitere erfindungsgemäße Merkmale und besondere Vorteile werden in der nachstehenden Beschreibung anhand der Zeichnungen noch näher erläutert. Es zeigen: Fig. 1 eine Schrägsicht des Gewindeteiles einer selbstbohrenden Schraube mit angesetztem Bohrteil; Fig. 2 ein Einsatzbeispiel einer solchen Schraube; Fig. 3 einen Bohrteil in Vorderansicht; die Fig. 4 bis 13 verschiedene Ausführungsformen der in den Schraubenschaft einsetzbaren Bohrteile.

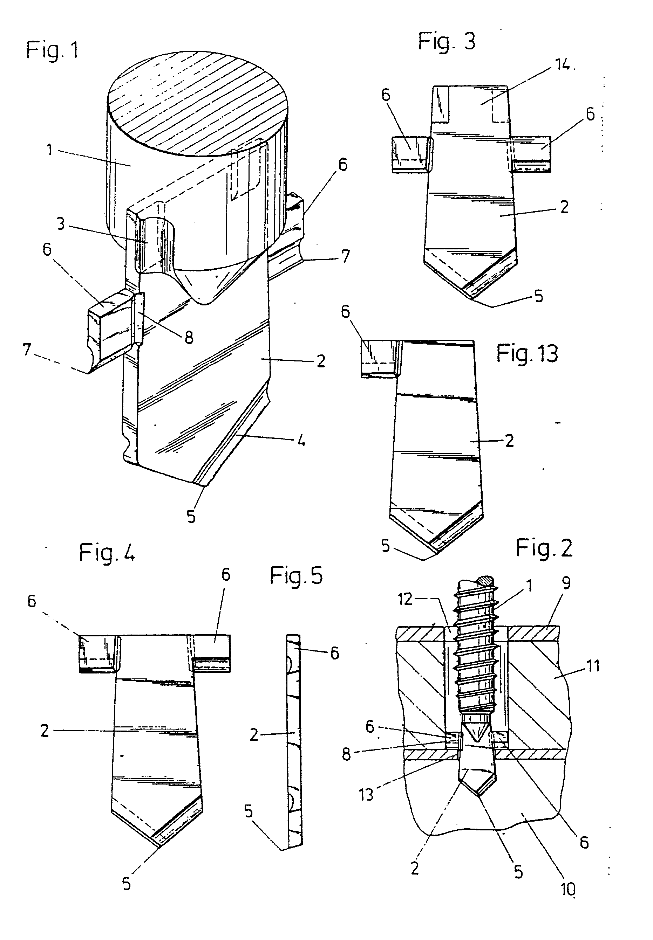

Bei dem in Fig. 1 gezeigten Beispiel weist der Schraubenschaft 1 ein Gewinde auf, welches entsprechend selbstschneidend ausgebildet ist. Am freien Ende des Schraubenschaftes 1 ist ein Schlitz vorgesehen, in welchen ein plättchenförmig ausgebildeter Bohrteil 2 eingesetzt ist. Durch entsprechende Querschnittsform des eingesetzten Endes des Bohrteiles 2 und durch Verformungen 3 an dem Schraubenschaft 1 wird eine formschlüssige Verbindung zwischen dem Bohrteil 2 und dem Schraubenschaft 1 hergestellt. Der Bohrteil 2 besitzt an seinem freien Ende eine entsprechende Bohrschneide 4. Der Schraubenschaft 1 und der Kopf der Schraube können beispielsweise aus einem rostfreien Stahl oder aus sonstigen Metallen oder aus Kunststoff hergestellt werden. Der Bohrteil 2 ist aus einem Bohrstahl oder einem Hartmetall gefertigt, so daß in einfacher Weise auch Stähle mit höchster Festigkeit durchbohrt werden können.

Es ist nun bei dieser Ausführungsvariante vorgesehen, daß an diesen Bohrteil 2 mit axialem Abstand von der Bohrspitze 5 zwei einander gegenüberliegend nach entgegengesetzte Richtungen quer zur Schraubenachse frei auskragende Flügel 6 oder Lappen anschließen. Die der Bohrspitze 5 zugewandten Begrenzungen der Flügel 6 sind als Bohrschneiden 7 ausgebildet.

Bei dieser zweckmäßen Ausführungsform, bei der also der Bohrteil 2 plättchenförmig ausgebildet ist, liegen die Flügel 6 in einer Ebene mit dem Bohrteil, was selbstverständlich ein sehr einfaches Herstellungsverfahren für einen solchen Bohrteil 2 bedeutet. Der Bohrteil 2 kann zusammen mit den Flügeln 6 sozusagen als Bohrplatte bezeichnet werden, welche in einem Arbeitsgang als Massenfertigungsteil gefertigt werden kann. Es ist also nicht wie bei bekannten selbstbohrenden Schrauben ein Fräsen der Bohrspitze und ein separates Anformen der Flügel erforderlich. Es ist daher eine wesentlich wirtschaftlichere und daher billigere Fertigung der gesamten selbstbohrenden Schraube möglich. Der Bohrteil 2 kann dabei aus einem überall gleich dicken Blech gestanzt sein. Selbstverständlich ist es auch möglich, daß die Dicke des Bohrteiles 2 von der Bohrspitze 5 ausgehend gegen den Schraubenschaft 1 hin zunimmt, zumindest in dem freiliegenden Bereich. Im Bereich des Schlitzes im Schraubenschaft 1 könnte dann der Bohrteil 2 entsprechend konisch sich wieder verjüngen oder aber aus einem Abschnitt mit parallel zueinander liegenden Außenflächen bestehen.

Aus der Fig. 1 ist auch ersichtlich, daß an der Anschluß-stelle der Flügel 6 an den Bohrteil 2 eine annähernd parallel zur Schraubenachse verlaufende Sollbruchkerbe 8 vorgesehen ist. Durch entsprechende Größe dieser Sollbruchkerbe 8 kann je nach dem geforderten Einsatz der selbstbohrenden Schraube eine genaue Einstellung erfolgen, so daß bei Eintreffen in den harten Befestigungsteil diese Flügel 6 sofort abbrechen können. Es können also die Sollbruchmomente der Flügel 6 an dem Bohrteil 2 durch eine genau und einfach fertigbare Sollbruchkerbe 8 bestimmt werden.

Bei den bisher bekanntgewordenen selbstbohrenden Schrauben mit zusätzlichen Bohrflügeln ist keine Sollbruchstelle vorgesehen, so daß eine saubere Bruchkante niemals gegeben ist. Eine unsaubere Bruchkante verursacht aber Schwierigkeiten bei der Gewindeeinformung im Stahlteil, da vorstehende Bruchkanten am Lochrand des Vorbohrdurchmessers für die Gewindeformung aufsitzen.

Der Fig. 1 kann ferner entnommen werden, daß die Flügel 6 an den der Bohrspitze 5 zugewandten Begrenzungen zur Bildung einer Bohrschneide 7 Hinterschneidungen aufweisen. Diese Hinterschneidungen können in einfacher Weise in einem Stanzverfahren bei der Herstellung des Bohrteiles 2 gefertigt werden. Eine solche Möglichkeit ist bei einem Anformen am Schraubenschaft 1 praktisch ausgeschlossen.

In Fig. 2 ist ein Einsatzbeispiel einer solchen selbstbohrenden und selbstgewindeschneidenden Schraube gezeigt. Es soll hier beispielsweise eine Abdeckbahn 9 aus Leichtmetall mit einem Stahlträger 10 verschraubt werden, wobei zwischen diesen beiden Teilen beispielsweise ein Isolierkörper 11 angeordnet ist. Die Bohrspitze 5 des Bohrteiles 2 bohrt vorerst durch die Abdeckung 9, worauf dann die Schneiden 7 der Flügel 6 bei der Abdeckung 9 zum Einsatz kommen. Der Gewindeabschnitt des Schraubenschaftes 1 kann dadurch ohne Berührung mit der abdeckung 9 die Öffnung 12 passieren. Nachfolgend dringt dann der Bohrteil 2 mit der Bohrspitze 5 in den Träger 10 ein, wobei nach dem Durchtritt des Bohrteiles 2 die Flügel 6 an dem Träger 10 zur anlage kommen. Da nunmehr das auf diese Flügel 6 ausgeübte Drehmoment die Haltekraft derselben am Bohrteil 2 übersteigt, brechen diese Flügel 6 an den Sollbruchkerben 8 ab. Durch die Sollbruchkerben ergibt sich eine saubere Sollbruchstelle, so daß keine vorstehenden Teile auf dem Rand der Öffnung 13 anstoßen. Bei weiterem Eindrehen der Schraube gelangt dann der Gewindeteil des Schraubenschaftes 1 in die Öffnung 13, so daß die endgültige Befestigung erfolgen kann.

Bei Bedarf kann der Bohrteil 2 nach der Setzung des Befestigers entfernt werden, wobei dies besonders dort wichtig ist, wo Verletzungsgefahr besteht. Eine solche Möglichkeit ist bei bekannten selbstbohrenden Schrauben mit zusätzlichen Bohrflügeln nicht gegeben.

Bei der ausführung nach Fig. 3 ist ersichtlich, daß die Flügel 6 an den auf den in den Schraubenschaft 1 eingesetzten Abschnitt 14 unmittelbar folgenden Abschnitt des Bohrteiles 2 anschließen. Für die Befestigung des Bohrteiles 2 im Schraubenschaft 1 bietet dies gewisse Vorteile. Bei der Ausführung nach den Fig. 4 und 5, welche eine Vorder- und eine Seitenansicht eines Bohrteiles 2 darstellen, sind die Flügel 6 an dem zum Schraubenkopf weisenden Ende des Bohrteiles 2 angeordnet.

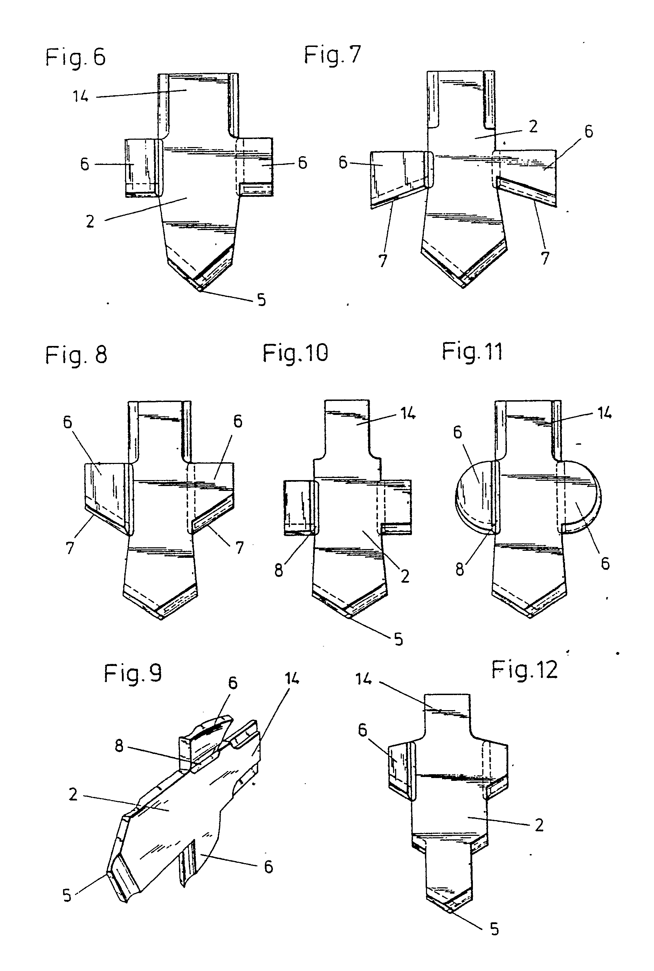

Gemäß dem ausführungsbeispiel nach Fig. 6 ist der Bohrteil 2 mit einer stark verjüngten Spitze 5 ausgeführt, was insbesondere für die Befestigung in Blechen vorteilhaft ist.

Bei der ausführung nach Fig. 7 schließen die Bohrschneiden 7 der Flügel 6 einen mit der Öffnung zur Bohrspitze 5 gerichteten Winkel mit der Schraubenachse ein. Der Spanwinkel ist dadurch negativ, so daß die Flügel 6 beim Auftreffen auf den harten Werkstoff einhaken und durch Torsion abbrechen.

Bei der ausführung nach Fig. 8 schließen die Bohrschneiden 7 der Flügel 6 einen mit der Öffnung zum Schraubenkopf weisenden Winkel mit der Schraubenachse ein. Dadurch wird ein Einhaken der Flügel 6 im weichen, zu befestigenden Teil vermieden, was insbesondere z. B. beim Bohren in Asbestwellprofilen vorteilhaft ist.

Bei der Ausführung nach Fig. 9 sind die Flügel 6 eines Flügelpaares gegensinnig verschwenkt, so daß die Spanabfuhr begünstigt wird. Man kann durch Schwenken entgegen der Drehrichtung einen negativen Spanwinkel erzeugen, was besonders vorteilhaft bei einem Bohren in Asbestzement ist, da dadurch ein Verhaken verhindert wird. In diesem Zusammenhang ist es auch möglich, daß die Flügel 6 spitzwinklig zu einer durch die Schraubenachse gedachten Ebene verlaufen, was beispielsweise bei besonderem zu verbohrendem Material zweckmäßig sein kann. Auch solche Ausgestaltungen sind selbstverständlich einfach zu fertigen, da in einem Stanzvorgang auch ein Abbiegen bzw. Verschwenken der Flügel erfolgen kann.

Bei der Ausgestaltung gemäß Fig. 10 liegen die Sollbruchkerben 8 innerhalb der Außenkontur des Bohrteils 2, so daß dadurch eine zusätzliche Sicherheit gegen vorstehende Teile nach Abbrechen der Flügel gegeben ist. Außerdem ist bei dieser Ausgestaltung der in dem Schraubenschaft 1 eingreifende Abschnitt 14 des Bohrteiles 2 etwas schmaler gehalten, so daß der Schlitz im Schraubenschaft 1 an dessen Enden praktisch geschlossen wird, um dadurch den Bohrteil 2 zu halten.

Bei der Ausgestaltung nach Fig. 11 ist eine besondere Form der Flügel 6 vorgesehen, und zwar sind diese halbkreisförmig ausgestaltet. Diese Flügelform ist besonders zum Bohren von spröden Materialien geeignet, z. B. Asbestzement, Hartschaum usw. Es ist bei solchen Materialien eine halbkreisförmige Laschenausbildung mit "stumpfer" Bohrschneide vorteilhaft.

Im Rahmen der Erfindung ist es selbstverständlich möglich, neben den bereits gezeigten Rechteckformen oder Trapezformen die Flügel 6 rhombus- oder dreieckförmig auszubilden.

Bei der Ausgestaltung nach Fig. 12 ist ein stufenartig abgesetztes Flügelpaar 6 vorgesehen, um ein stufenweises Aufbohren des Tragteiles zu ermöglichen. Es bieten sich dadurch Vorteile für ein schnelles Durchdringen des Tragteiles mit höheren Schnittgeschwindigkeiten. Eine solche Variante wäre bei den derzeit bekannten Bohrschrauben mit zusätzlichen Bohrflügeln 6 nicht realisierbar, da hiezu zu komplizierte Fräsautomaten nötig wären. In diesem Zusammenhang ist es auch denkbar, daß am Bohrteil 2 zwei oder mehrere Flügelpaare mit in Einschraubrichtung gesehen größer werdenden radialen Abmessungen anschließen. Es wären dann also einzelne voneinander getrennte Stufen vorgesehen.

Fig. 13 zeigt ein Ausführungsbeispiel eines Bohrteiles 2, bei welchem lediglich ein Flügel 6 angeordnet ist. Je nach dem zu bohrenden Material wird es ausreichen, lediglich einen solchen Flügel 6 vorzusehen.

In der vorstehenden Beschreibung wurde stets davon ausgegangen, daß der Bohrteil 2 plättchenförmig ausgebildet ist. Selbstverständlich lassen sich die erfindungsgemäßen Maß-nahmen auch bei anders ausgebildeten Bohrteilen verwirklichen. Beispielsweise könnte der an den Schraubenschaft 1 anschließende Abschnitt des Bohrteiles 2 ebenfalls einen kreisförmigen Querschnitt aufweisen, wobei ein Zapfen des Bohrteiles 2 in eine Bohrung des Schraubenschaftes 1 eingreifen könnte. Auch ist es denkbar, einen solchen Bohrteil 2 stumpf mit dem Schraubenschaft 1 zu verbinden, beispielsweise durch Schweißen oder Löten.

**Patentansprüche:**

1. Selbstbohrende Schraube mit einem am freien Ende des Schraubenschaftes (1) in eine Öffnung, einen Schlitz od. dgl. eingreifend oder stumpf anstoßend befestigten, aus einem Bohrstahl oder einem Hartmetall gefertigten Bohrteil (2), dadurch gekennzeichnet, daß am Bohrteil (2) mit axialem Abstand von der Bohrspitze (5) ein oder mehrere quer zur Schraubenachse frei auskragende(r) Flügel (8) oder Lappen anschließt bzw. anschließen, dessen bzw. deren der Bohrspitze (5) zugewandte Begrenzung als Bohrschneide (7) ausgebildet ist, und daß an der Anschlußstelle der Flügel (8) an den Bohrteil (2) eine annähernd parallel zur Schraubenachse verlaufende Sollbruchkerbe (8) vorgesehen ist.

2. Schraube nach Anspruch 1, dadurch gekennzeichnet, daß die Sollbruchkerben (8) innerhalb der Außenkon-tur des Bohrteiles (2) liegen.

3. Schraube nach den Ansprüchen 1 und 2, dadurch gekennzeichnet, daß am Bohrteil (2) zwei oder mehrere Flügel oder Flügelpaare (8) mit in Einschraubrichtung gesehen größer werdenden radialen Abmessungen bzw. ein stufenweise abgesetzter Flügel bzw. ein abgesetztes Flügelpaar (8) anschließen (Fig. 12).

4. Schraube nach einem der Ansprüche 1 bis 3, dadurch gekennzeichnet, daß die Flügel (8) an dem zum Schraubenkopf weisenden Ende (14) des Bohrteiles (2) angeordnet sind.

5. Schraube nach einem der Ansprüche 1 bis 4, dadurch gekennzeichnet, daß die Flügel (8) an dem auf den in dem Schraubenschaft (1) eingesetzten Abschnitt (14) unmittelbar folgenden Abschnitt des Bohrteiles (2) anschlie-ßen

6. Schraube nach einem der Ansprüche 1 bis 4, dadurch gekennzeichnet, daß die Flügel (8) an den der Bohrspitze (5) zugewandten Begrenzungen eine hinterschnittene Bohrschneide (7) aufweisen.

7. Schraube nach einem der Ansprüche 1 bis 8, dadurch gekennzeichnet, daß die Bohrschneiden (7) der Flügel (8) einen mit der Öffnung zur Bohrspitze (5) gerichteten Winkel mit der Schraubenachse einschließen (Fig. 7).

8. Schraube nach einem der Ansprüche 1 bis 8, dadurch gekennzeichnet, daß die Bohrschneiden (7) der Flügel (8) einen mit der Öffnung zum Schraubenkopf weisenden Winkel mit der Schraubenachse einschließen (Fig. 8).

9. Schraube nach einem der Ansprüche 1 bis 7, dadurch gekennzeichnet, daß die Flügel (8) eines Flügelpaares gleichsinnig verschwenkt sind (Fig. 9).

## Claims

1. A self-drilling screw with a drilling part (2) which at the free end of the screw shank (1) engages in an opening, a slot or the like or is secured by a butt joint and which is made of a drill steel or a hard metal, characterised in that connected to the drilling part (2) are one or more blades (6) or lugs freely projecting transversely to the screw axis at an axial distance from the drilling tip (5), the boundary of the or each blade nearest the drilling tip (5) is in the form of a cutter (7), and in that a predetermined break groove (8) extending approximately parallel to the screw axis is provided at the connection of the blade (6) to the drilling part (2).

2. A screw according to Claim 1, characterised in that the predetermined break grooves (8) lie inSide the outer contour of the drilling part (2).

3. A screw according to Claims 1 and 2, characterised in that connected to the drilling part (2) are two or more blades or pairs of blades (6) with increasing radial dimensions, viewed in the Screwing-in direction, or a blade stepped in stages or a stepped pair of blades (6) (Figure 12).

4. A screw according to one of Claims 1 to 3, characterised in that the blades (6) are disposed at the end (14) of the drilling part (2) facing towards the screw head.

5. A screw according to one of Claims 1 to 4, characterised in that the blades (6) are connected to that portion of the drilling part (2) immediately following the portion (14) inserted in the screw shank (1).

6. A screw according to one of Claims 1 to 4, characterised in that on the boundaries nearest the drilling tip (5) the blades (6) have an undercut cutter (7).

7. A screw according to one of Claims 1 to 6, characterised in that the cutters (7) of the blades (6) form with the screw axis an angle with its opening directed towards the drilling tip (5) (Figure 7).

8. A screw according to one of Claims 1 to 6, characterised in that the cutters (7) of the blades (6) form with the screw axis an angle with its opening facing towards the screw head (Figure 8).

9. A screw according to one of Claims 1 to 7, characterised in that the blades 56) of one pair of blades are twisted in the same direction (Figure 9).

## Revendications

1°) Vis auto-forante, comportant une pièce forante (2) en acier à forer ou en métal dur, fixée à l'extrémité libre de la tige de la vis (1) dans une ouverture, une fente ou autre, en s'y engageant ou en étant poussée bouta bout, vis caractérisée en ce qu'elle se raccorde à la pièce forante (2), a une certaine distance de la pointe de forage (5), une ou plusieurs ailettes (6) ou pattes, saillant librement perpendiculairement à l'axe de la vis, dont la (ou les) limitation tournée vers la pointe de forage (5) est réalisée sous la forme d'un tranchant de forage (7), et qu'à l'endroit du raccordement de l'ailette (6) sur la pièce forante (2), il est prévu une entaille de rupture (8) qui s'étend à peu près parallélément à l'axe de la vis.

2°) Vis suivant la revendication 1, caractérisée en ce que les entailles de rupture (8) se trouvent à l'intérieur du contour extérieur de la pièce forante (2).

3°) Vis suivant les revendications 1 et 2, caractérisée en ceque, sur la partie forante (2), se raccordent deux, ou plusieurs ailettes ou paires d'ailettes (6), dont les dimensions radiales deviennent plus grandes en regardant dans la direction du vissage ou une ailette diminuant par degrés, ou une paire d'ailettes (6) diminuant par degrés (figure 12).

4°) Vis suivant l'une des revendications 1 à 3, caractérisée en ceque les ailettes (6) sont placées sur l'extrémité (14) de la piéce forante (2) dirigée vers la tête de la vis.

5°) Vis suivant l'une quelconque des revendications 1 à 4, caractérisée en ce que les ailettes (6) se raccordent à la section de la pièce forante (2) qui suit immédiatement la section (14) insérée dans la tige (1) de la vis.

6°) Vis suivant l'une des revendications 1 à 4, caractérisée en ce que les ailettes (6) présentent, sur les limites tournées vers la pointe (5) forante, un tranchant de forage (7) taille en contre-dépouille.

7°) Vis suivant l'une des revendications 1 à 6, caractérisée en ce que les tranchants de forage (7) des ailettes (6) forment, avec l'axe de la vis, un angle dont l'ouverture est dirigée vers la pointe de forage (5) (figure 7).

8°) Vis suivant l'une des revendications 1 à 6, caractérisée en ce que les tranchants (7) de forage des ailettes (6) forment avec l'axe de la vis, un angle dont L'ouverture est dirigée vers la tête de la vis (figure 8).

9°) Vis suivant l'une des revendications 1 à 7, caractérisée en ce que les ailettes (6) d'une paire l'ailettes sont tournées dans le même sens (figure 9).

Fig. 1

Fig. 3

Fig. 13

Fig. 4

Fig. 5

Fig. 2

Fig. 6

Fig. 7

Fig. 8

Fig. 10

Fig. 11

Fig. 9

Fig. 12